# EUROPEAN PATENT APPLICATION

(11) **EP 4 575 817 A1**
(43) Date of publication of application: **25.06.2025**
(21) Application number: 22956031.3
(22) Date of filing: 24.08.2022
(51) Int. Cl.: G06F 15/173, G06F 1/10

(54) **FREQUENCY MODULATION METHOD AND APPARATUS**

(71) Applicant: Huawei Technologies Co., Ltd., Shenzhen, Guangdong 518129 (CN)
(72) Inventor: LUO, Yilin, Shenzhen, Guangdong 518129 (CN); LUO, Yi, Shenzhen, Guangdong 518129 (CN); YIN, Haifeng, Shenzhen, Guangdong 518129 (CN)
(74) Representative: Gill Jennings & Every LLP
(86) International application number: PCT/CN2022/114623
(87) International publication number: WO 2024/040483

(57) **Abstract**

Embodiments of this application relate to the field of chip technologies, and disclose a frequency adjustment method and an apparatus, to implement fast switching of clock frequencies of a SoC domain and an interconnection interface in a chiplet system, and reduce cache space required by service data. The method is applied to a chip system, the chip system includes a first die and a second die, and the method includes: The first die sends a frequency switching request to the second die, where the frequency switching request includes information indicating a frequency level after switching. The second die adjusts an operating frequency of a receiver circuit of the second die based on the frequency level. Embodiments of this application are for performing frequency adjustment on a die in the chip system.

## Description

### TECHNICAL FIELD

This application relates to the field of chip technologies, and in particular, to a frequency adjustment method and an apparatus.

### BACKGROUND

In a chip system (Chiplet), to implement low latency of an entire chiplet path, in the chiplet, clock frequencies of die-to-die (die-to-die) interconnection interfaces may be synchronized with clock frequencies of SoC domains (domains), to reduce a latency increase caused by asynchronous processing. In this case, when the clock frequency of the SoC domain is adjusted, the clock frequency of the interconnection interface also needs to be adjusted synchronously.

In a dynamic frequency adjustment process, service data still exists. When the clock frequency of the SoC domain is switched, the service data needs to be cached in the system. Long switching latency causes long service latency and increases service data cache space. Therefore, how to reduce clock frequency switching latency in the chiplet is an urgent problem to be resolved.

### SUMMARY

Embodiments of this application provide a frequency adjustment method and an apparatus, to implement fast switching of clock frequencies of a SoC domain and an interconnection interface in a chiplet system, and reduce cache space required by service data.

To achieve the foregoing objectives, the following technical solutions are used in embodiments of this application.

According to a first aspect, a frequency adjustment method is provided. The method is applied to a chip system, the chip system includes a first die and a second die, and the method includes: The first die sends a frequency switching request to the second die, where the frequency switching request includes information indicating a frequency level after switching; and the second die adjusts an operating frequency of a receiver circuit of the second die based on the frequency level.

The frequency level in this application may also be referred to as a frequency range. In this application, this is equivalent to training die-to-die frequency levels in the chip system in advance, and each frequency level corresponds to an operating frequency. When the first die and the second die perform service data transmission, if an operating frequency of a transmitter circuit of the first die is switched, the second die needs to adaptively adjust the operating frequency of the receiver circuit. In this application, when the first die sends, to the second die, the information indicating the frequency level after switching, the second die may quickly adjust, based on the information indicating the frequency level after switching, the operating frequency of the receiver circuit corresponding to the frequency level.

Therefore, in this application, compared with a case in which during rate switching on a PCIE link, a recovery state needs to be entered each time to perform link re-training, and then an L0 state is switched back to, causing relatively long switching latency, in this application, frequency switching latency is relatively short. In addition, in this application, compared with a problem that interface power consumption cannot be mitigated due to die-to-die rate switching performed by adjusting a quantity of lanes between interconnection interfaces, operating frequency switching is directly implemented through die-to-die exchanging of the information indicating the frequency level, and when the operating frequency switching is performed, the interface power consumption may be correspondingly adjusted.

In addition, generally, when die-to-die frequency switching is performed, to maintain a service flow uninterrupted, service data needs to be cached. In this application, based on implementing fast die-to-die frequency switching, cache space required for caching the service data can also be reduced.

In a possible design, the transmitter circuit of the first die and the receiver circuit of the second die are in a same clock domain. In other words, a SoC domain of the first die, the transmitter circuit, and the receiver circuit of the second die are all in a same clock domain. In this way, when operating frequencies of the SoC domain and the transmitter circuit of the first die are adjusted, digital logic of the first die and the second die at a data link layer can perform dynamic voltage adjustment based on a frequency change of the SoC domain. This can further reduce power consumption.

In a possible design, before that the first die sends a frequency switching request to the second die, the method further includes: The first die receives a frequency mode configuration command sent by an application layer, where the frequency mode configuration command includes first indication information, and the first indication information indicates the frequency level after switching; and the first die generates the frequency switching request based on the frequency mode configuration command.

In this design, when a service type of the application layer of the first die changes, an operating frequency of processing a service flow of the service type by the first die also changes accordingly, so that a changed operating frequency adapts to a new service type. Therefore, when determining to change the operating frequency of the first die, the application layer of the first die may send the frequency mode configuration command to the first die, to indicate the frequency level after switching. For example, frequency levels corresponding to different service types are stored at the application layer.

In a possible design, before that the second die adjusts an operating frequency of a receiver circuit of the second die, the method further includes: The first die stops receiving service data from the application layer.

To be specific, when the application layer of the first die determines to perform frequency adjustment, the application layer of the first die stops sending the service data to the SoC domain of the first die, so that the first die may perform frequency adjustment, and exchange the frequency level after switching with the second die.

In a possible design, that the first die sends a frequency switching request to the second die includes: The first die sends the frequency switching request to the second die by using a first low power control word LPW flow control unit or a first sideband control command; and the method further includes: The first die receives, by using a second LPW flow control unit or a second sideband control command, a frequency switching response sent by the second die.

The first LPW flit may be understood as being sent by the first die to the second die through a data link. The first sideband control command may be understood as being sent by the first die to the second die through a sideband control channel. Correspondingly, the second LPW flit is sent by the second die to the first die through the data link. The second sideband control command is sent by the second die to the first die through the sideband control channel.

In a possible design, the first LPW flow control unit includes a flow control unit header field, a flow control unit content field, and a flow control unit tail field, where the flow control unit content field includes a sub-type field and a command subfield, the sub-type field indicates that the first LPW flow control unit is a frequency switching command, and the command subfield indicates the frequency level.

In a possible design, the first sideband control command includes a field indicating a message type, a field indicating message code, a field indicating a lane identifier, and a field indicating a parity bit, where the field indicating the message type indicates that the first sideband control command is a frequency switching command.

In a possible design, before that the second die adjusts an operating frequency of a receiver circuit of the second die, the method further includes: The first die stops sending an echo clock to the second die, and adjusts an operating frequency of the transmitter circuit of the first die based on the frequency level.

In this design, a clock lane may exist between the first die and the second die, and the receiver circuit in the second die receives, based on a clock frequency of the echo clock sent by the first die by using the clock lane, the service data sent by the transmitter circuit of the first die. If the first die performs frequency switching, the first die may stop sending the echo clock to the second die, so that after the operating frequency of the transmitter circuit of the first die is switched, an echo clock of a new operating frequency is sent to the second die by using the clock lane at a new operating frequency. In this way, a clock frequency of the receiver circuit of the second die is also correspondingly adjusted.

In a possible design, before that the second die adjusts an operating frequency of a receiver circuit of the second die, the method further includes: The first die continuously sends a null flow control unit to the second die until the frequency switching response sent by the second die is received.

Alternatively, the first die continuously sends the frequency switching command to the second die until the frequency switching response sent by the second die is received.

In a possible design, before that the second die adjusts an operating frequency of a receiver circuit of the second die, the method further includes: after determining that frequency switching negotiation with the second die is completed, the first die makes a response to the application layer that the frequency switching negotiation is completed.

To be specific, after the first die receives the frequency switching configuration command sent by the application layer, if the first die completes frequency switching negotiation with the second die, the first die may make a response to the application layer of the first die that the frequency switching negotiation is completed, so that the application layer starts frequency switching of the SoC domain of the first die.

In a possible design, before that the second die adjusts an operating frequency of a receiver circuit of the second die, the method further includes: The first die sends a frequency switching indication to the second die, where the frequency switching indication indicates the second die to perform frequency switching.

When the first die sends the frequency switching indication to the second die, the first die may start to perform operating frequency switching of the transmitter circuit of the first die, or may be performing operating frequency switching of the transmitter circuit of the first die, or may finish operating frequency switching of the transmitter circuit of the first die. When the second die receives the frequency switching indication, the second die may start to perform frequency switching of the receiver circuit of the second die.

In this application, that the first die performs frequency switching of the transmitter circuit of the first die may be understood as that the first die determines a circuit configuration parameter of the transmitter circuit based on the frequency level, and configures a circuit parameter of the transmitter circuit based on the circuit configuration parameter of the transmitter circuit. Similarly, that the second die performs frequency switching of the receiver circuit of the second die may be understood as that the second die determines a circuit configuration parameter of the receiver circuit based on the frequency level, and configures a circuit parameter of the receiver circuit based on the circuit configuration parameter of the receiver circuit.

In a possible design, the method further includes: The first die starts the echo clock of the first die after waiting for fixed latency.

Generally, the fixed latency needs to cover stabilizing time after the second die switches the operating frequency and stabilizing time after the first die switches the operating frequency. In this way, this is equivalent to giving enough time to the first die and the second die to complete frequency switching, so that after the first die and the second die complete frequency switching, the first die starts the echo clock under a new operating frequency, and starts to exchange the service data with the second die.

In a possible design, the method further includes: The first die sends, at the frequency level, data to the second die; and the second die receives, at the frequency level, the data sent by the first die.

In this way, after completing operating frequency switching by exchanging frequency level information, the first die and the second die exchange the service data at a new operating frequency.

According to a second aspect, a frequency adjustment method is provided. The method is applied to a chip system, the chip system includes a first die and a second die, and the method includes: The second die receives a frequency switching request sent by the first die, where the frequency switching request includes information indicating a frequency level after switching; and the second die adjusts an operating frequency of a receiver circuit of the second die based on the frequency level.

For beneficial benefits of the second aspect, refer to the descriptions of the first aspect.

In a possible design, a transmitter circuit of the first die and the receiver circuit of the second die are in a same clock domain.

In a possible design, that the second die receives a frequency switching request sent by the first die includes: The second die receives, by using a first low power control word LPW flow control unit or a first sideband control command, the frequency switching request sent by the first die; and the method further includes: The second die sends, by using a second LPW flow control unit or a second sideband control command, a frequency switching response to first die.

In a possible design, the method further includes: When receiving the frequency switching request sent by the first die, the second die records the information indicating the frequency level after switching.

In a possible design, before that the second die adjusts an operating frequency of a receiver circuit of the second die based on the frequency level, the method further includes: The second die receives a frequency switching indication sent by the first die, where the frequency switching indication indicates the second die to perform frequency switching.

According to a third aspect, a frequency adjustment method is provided. The method is applied to a chip system, the chip system includes a first die and a second die, and the method includes: The first die sends a frequency switching request to the second die, where the frequency switching request includes information indicating a frequency level after switching; and the first die adjusts an operating frequency of a transmitter circuit of the first die based on the frequency level.

For beneficial benefits of the third aspect, refer to the descriptions of the first aspect.

In a possible design, the transmitter circuit of the first die and a receiver circuit of the second die are in a same clock domain.

In a possible design, that the first die sends a frequency switching request to the second die includes: The first die sends the frequency switching request to the second die by using a first low power control word LPW flow control unit or a first sideband control command; and the method further includes: The first die receives, by using a second LPW flow control unit or a second sideband control command, a frequency switching response sent by the second die.

According to a fourth aspect, a chip system is provided. The chip system includes a first die and a second die, where the first die is configured to send a frequency switching request to the second die, where the frequency switching request includes information indicating a frequency level after switching; and the second die is configured to adjust an operating frequency of a receiver circuit of the second die based on the frequency level.

For beneficial benefits of the fourth aspect, refer to the descriptions of the first aspect.

In a possible design, a transmitter circuit of the first die and the receiver circuit of the second die are in a same clock domain.

In a possible design, the first die is configured to: receive a frequency mode configuration command sent by an application layer, where the frequency mode configuration command includes first indication information, and the first indication information indicates the frequency level after switching; and generate the frequency switching request based on the frequency mode configuration command.

In a possible design, the first die is configured to: send the frequency switching request to the second die by using a first low power control word LPW flow control unit or a first sideband control command; and receive, by using a second LPW flow control unit or a second sideband control command, a frequency switching response sent by the second die.

According to a fifth aspect, a second die is provided. A chip system includes a first die and the second die, and the second die includes: a receiver, configured to receive a frequency switching request sent by the first die, where the frequency switching request includes information indicating a frequency level after switching; and a processor, configured adjust an operating frequency of a receiver circuit of the second die based on the frequency level.

In a possible design, a transmitter circuit of the first die and the receiver circuit of the second die are in a same clock domain.

In a possible design, the receiver is configured to: receive, by using a first low power control word LPW flow control unit or a first sideband control command, the frequency switching request sent by the first die; and the receiver is further configured to: send a frequency switching response to the first die by using a second LPW flow control unit or a second sideband control command.

In a possible design, the processor is further configured to: when the receiver is configured to receive the frequency switching request sent by the first die, record the information indicating the frequency level after switching.

In a possible design, the receiver is further configured to: receive a frequency switching indication sent by the first die, where the frequency switching indication indicates the second die to perform frequency switching.

According to a sixth aspect, a first die is provided. A chip system includes the first die and a second die, and the first die includes: a transmitter, configured to send a frequency switching request to the second die, where the frequency switching request includes information indicating a frequency level after switching; and a processor, configured to adjust an operating frequency of a transmitter circuit of the first die based on the frequency level.

In a possible design, the transmitter circuit of the first die and a receiver circuit of the second die are in a same clock domain.

In a possible design, the transmitter is configured to: send the frequency switching request to the second die by using a first low power control word LPW flow control unit or a first sideband control command; and the first die further includes a receiver, configured to receive, by using a second LPW flow control unit or a second sideband control command, a frequency switching response sent by the second die.

According to a seventh aspect, an embodiment of this application provides a chip system, where the chip system includes the die according to any one of the possible designs of the first aspect to the third aspect, the chip system includes a plurality of dies, each die includes an interface circuit and a processor (SoC domain), the interface circuit is interconnected to the processor via a line, and the processor receives and executes computer instructions from a memory outside the chip system through the interface circuit.

According to an eighth aspect, an embodiment of this application provides a computer-readable storage medium, including computer instructions. When the computer instructions are run on an electronic device, the electronic device is enabled to perform the method according to any one of the first aspect and the possible designs of the first aspect.

According to a ninth aspect, an embodiment of this application provides a computer-readable storage medium, including computer instructions. When the computer instructions are run on an electronic device, the electronic device is enabled to perform the method according to any one of the second aspect and the possible designs of the second aspect.

According to a tenth aspect, an embodiment of this application provides a computer-readable storage medium, including computer instructions. When the computer instructions are run on an electronic device, the electronic device is enabled to perform the method according to any one of the third aspect and the possible designs of the third aspect.

According to an eleventh aspect, an embodiment of this application provides a computer program product. When the computer program product runs on a computer or a processor, the computer or the processor is enabled to perform the method according to any one of the first aspect and the possible implementations.

According to a twelfth aspect, an embodiment of this application provides a computer program product. When the computer program product runs on a computer or a processor, the computer or the processor is enabled to perform the method according to any one of the second aspect and the possible implementations.

According to a thirteenth aspect, an embodiment of this application provides a computer program product. When the computer program product runs on a computer or a processor, the computer or the processor is enabled to perform the method according to any one of the third aspect and the possible implementations.

It may be understood that any first die, second die, chip system, computer-readable storage medium, computer program product, or the like provided above may be used in the corresponding method provided above. Therefore, for beneficial effect that can be achieved by the first die, the second die, the chip system, the computer-readable storage medium, the computer program product, or the like, refer to beneficial effect in the corresponding method. Details are not described herein again.

These aspects or other aspects in this application are more concise and comprehensible in the following descriptions.

### BRIEF DESCRIPTION OF DRAWINGS

FIG. 1 is a diagram of a circuit of die-to-die coupling according to an embodiment of this application;
FIG. 2 is a diagram of state switching of frequency switching in a PCIE link according to an embodiment of this application;
FIG. 3 is a diagram of achieving die-to-die rate switching by adapting different lanes according to an embodiment of this application;
FIG. 4 is a diagram of a chip system according to an embodiment of this application;
FIG. 5 is a schematic flowchart of a frequency adjustment method according to an embodiment of this application;
FIG. 6 is a diagram of a circuit of die-to-die interconnection interface and SoC domain coupling according to an embodiment of this application;
FIG. 7 is a schematic flowchart of a frequency adjustment method according to an embodiment of this application;
FIG. 8 is a diagram of interconnection of die-to-die sideband signal interfaces according to an embodiment of this application;
FIG. 9 is a diagram of a time sequence when a sideband signal interface performs transmission in a packet manner according to an embodiment of this application;
FIG. 10 is a diagram of a format of a sideband control signal according to an embodiment of this application;
FIG. 11 is a diagram of a structure of a die according to an embodiment of this application;
FIG. 12 is a diagram of a structure of a die according to an embodiment of this application; and
FIG. 13 is a diagram of a structure of a chip according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

A chiplet system, which may be also referred to as a chip system, is a combination of dies (dies) with different functions, or a combination of different IPs. From a system end, complex functions are first decomposed, and then a plurality of dies that have a single specific function and that can be modularly assembled with each other are developed to implement functions such as data storage, computing, signal processing, and data stream management, based on which a chiplet chip network is eventually established. Alternatively, it may alternatively be understood as a mode in which a plurality of module chips and a bottom-layer basic chip are packaged together by using a die-to-die internal interconnection technology, to form a multi-function heterogeneous system in packages (SiPs) chip.

In the chiplet system, low latency and low power consumption are key features. In an actual operating scenario, bandwidths of die-to-die interconnection interfaces vary with a service bandwidth. Interface power consumption also varies with the bandwidth. When the service bandwidth is low, the power consumption can be reduced proportionally.

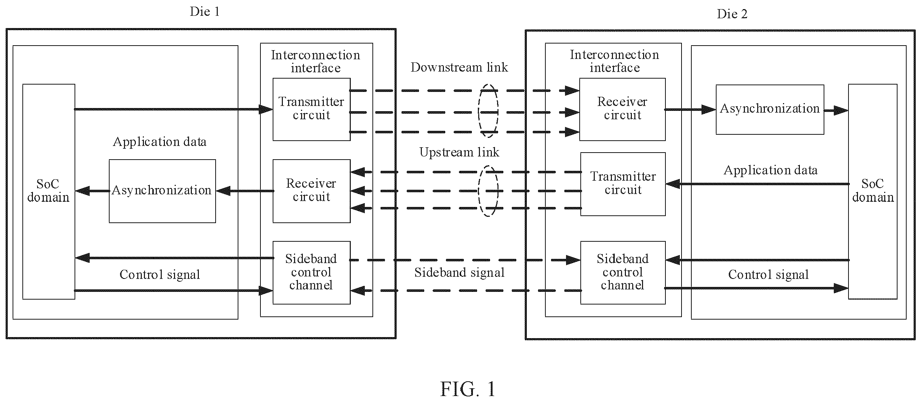

In addition, to implement low latency of an entire die-to-die path, a clock frequency of the interconnection interface may be synchronized with that of a SoC domain of the die, to reduce latency increase caused by asynchronous processing. As shown in FIG. 1, the die includes a SoC domain and an interconnection interface circuit. The interconnection interface circuit includes a transmitter circuit, a receiver circuit, and a sideband control channel. The SoC domain may transmit application data (application data), that is, service data, to the transmitter circuit of the interconnection interface circuit. The SoC domain may further transmit a control signal through the sideband control channel of the interconnection interface circuit.

A SoC domain of a die 1, a transmitter circuit of the die 1 in an interconnection interface, and a receiver circuit of a die 2 in an interconnection interface are in a same clock domain. When a clock frequency of the SoC domain of the die 1 changes, a clock frequency of a transmitter circuit of the die 1 in the interconnection interface and a clock frequency of the receiver circuit of the die 2 in the interconnection interface also need to be adjusted synchronously. The transmitter circuit of the die 1 in the interconnection interface may be used as a link master (link master) device of the die 1, and the receiver circuit of the die 2 in the interconnection interface may be used as a link slave (link slave) device of the die 2.

Similarly, a SoC domain of the die 2, a transmitter circuit of the die 2 in the interconnection interface, and a receiver circuit of the die 1 in the interconnection interface are in a same clock domain. When a clock frequency of the transmitter circuit of the SoC domain of the die 2 changes, a clock frequency of the transmitter circuit of the die 2 in the interconnection interface and a clock frequency of the receiver circuit of the die 1 in the interconnection interface also need to be adjusted synchronously. The transmitter circuit of the die 2 in the interconnection interface may be used as a link master of the die 2, and the receiver circuit of the die 1 in the interconnection interface may be used as a link slave of the die 1.

FIG. 1 further shows that the SoC domain of the die 1 and the receiver circuit of the die 1 in the interconnection interface are coupled through an asynchronous circuit. Because the asynchronous circuit is mainly a combinational logic circuit, and does not use a clock pulse for synchronization, data synchronization, communication, and an operation sequence between different components are generally implemented according to a handshake protocol. When receiving data of the receiver circuit, the asynchronous circuit needs to send the data to the SoC domain of the die 1 according to the handshake protocol. Therefore, a clock of the SoC domain of the die 1 and a clock of the receiver circuit of the die 1 are asynchronous clock domains. Similarly, a clock of the SoC domain of the die 2 and a clock of the receiver circuit of the die 2 in the interconnection interface are also asynchronous clock domains. The die 1 and the die 2 may transmit a sideband signal (sideband signal) through a sideband control channel (sideband control channel). When the die 1 is a master chip and the die 2 is a slave chip, the transmitter circuit of the die 1 may send downstream data to the receiver circuit of the die 2 through a downstream link (downstream link), and the transmitter circuit of the die 2 may send upstream data to the link slave of the die 1 through an upstream link (upstream link). The die 1 and the die 2 may transmit the upstream data and the downstream data by using a flow control unit (flow control unit, flit).

In addition, in a frequency adjustment process, the service data still exists, and the service data in a switching process needs to be cached. Therefore, reducing switching latency facilitates cache space reducing, and can also reduce service latency caused in the switching process.

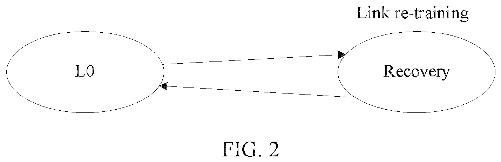

Currently, in a high-speed interconnection solution, after switching of different clock frequencies, to maintain stability of latency and stability of transmission performance of a link state, in a high-speed serial computer extended bus standard (peripheral component interconnect express, PCIE) link, when a clock frequency changes, a state machine needs to be switched from an L0 state to a recovery (Recovery) state to perform link re-training (Re-Training). After the training is complete, the L0 state is switched back to. As shown in FIG. 2, the L0 state is a normal operating state of the PCIE link, and in this state, the PCIE link can normally send and receive data.

However, in this solution, a retraining process takes a long time, and consequently, time from switching of different clock frequencies to link stabilizing is long. In addition, in the frequency switching process, the service data still exists, and cache space required by the service data is increased. This is not applicable to a scenario that has a high requirement on real-time performance of link switching.

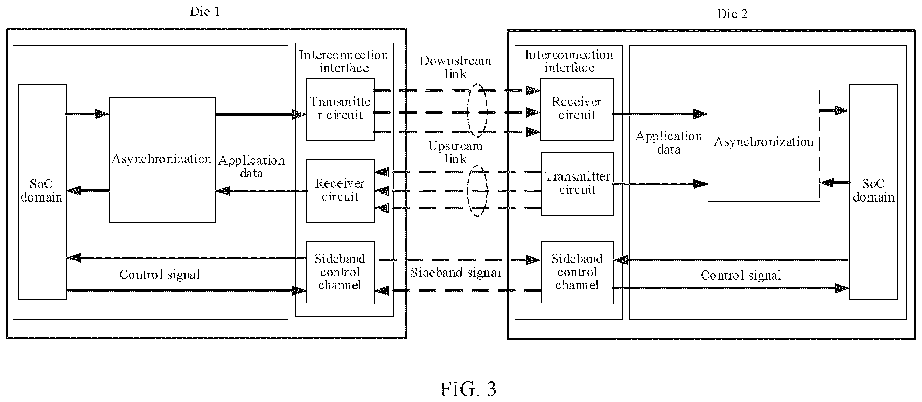

In a solution of matching rate switching, a rate switching objective can be achieved by adapting different lane (lane) quantities. However, in this scenario, as shown in FIG. 3, an interconnection interface and a SoC domain are coupled through an asynchronous circuit. A clock domain of an interconnection interface and a clock domain of a SoC domain in a single die are different clock domains, that is, asynchronous clock domains. The clock domain of the interconnection interface and the clock domain of the SoC domain do not use clock pulse synchronization. The interconnection interface works at a fixed frequency. When a clock frequency of the SoC domain is adjusted, a clock frequency of the interconnection interface remains unchanged, and a rate of the interconnection interface is matched by adjusting a lane quantity of the interconnection interface. In this solution, asynchronous processing increases latency. In addition, the interconnection interface matches a rate change based on different lane quantities. When a rate of the interconnection interface decreases, a digital part of the interconnection interface cannot decrease an operating voltage with the decrease of the rate, and power consumption performance of the interconnection interface is poor.

Therefore, this application provides a frequency adjustment method, so that a frequency of an interconnection interface can be dynamically adjusted in a chiplet. Through die-to-die exchanging of information indicating different frequency levels, fast switching of a frequency range is implemented and link switching latency is reduced.

In the frequency adjustment method in this application, when an operating frequency of a SoC domain changes, operating frequencies of die-to-die interconnection interfaces also change. Before frequency adjustment, a circuit configuration parameter of an interconnection interface at each frequency level may be separately trained in an initialization process, and a training result is stored in each die. When a transmit end needs to adjust the frequency of the interconnection interface based on the operating frequency of the SoC domain, the transmit end notifies, through an interaction procedure, a receive end of an indication of a frequency level that needs to be switched to, and the receive end may query a corresponding circuit configuration parameter from a training parameter based on the indication of the frequency level, to switch to the frequency level.

Embodiments of this application may be applied to a chiplet system. The chiplet system includes a plurality of dies that have specific functions and that can be modularly assembled with each other. For example, the die may implement functions such as data storage, computing, signal processing, and data stream management. Based on rich IP reservation, in the chiplet system, a concept of IP as a chiplet (IP as a Chiplet, IaaC) is proposed, aiming to use a die to realize "plug-and-play" of a special function IP. For example, for some core processor IPs, the die may be a graphics processing unit (Graphics Processing Unit, GPU) IP, a neural-network processing unit (Neural-network Unit, NPU) IP, a video processing unit (Video Processing Unit, VPU) IP, a digital signal processor (digital signal processing, DSP) IP, an image signal processor (Image Signal Processor, ISP) IP, or a display processor IP. In addition, the die may alternatively be a digital/analog hybridization IP, a radio frequency IP, and the like.

The chiplet system in this application, that is, a chip system, may also be referred to as a small chip system or a chiplet system. In the small chip system, the die may also be referred to as a small chip, and in the chiplet system, the die may also be referred to as a chiplet.

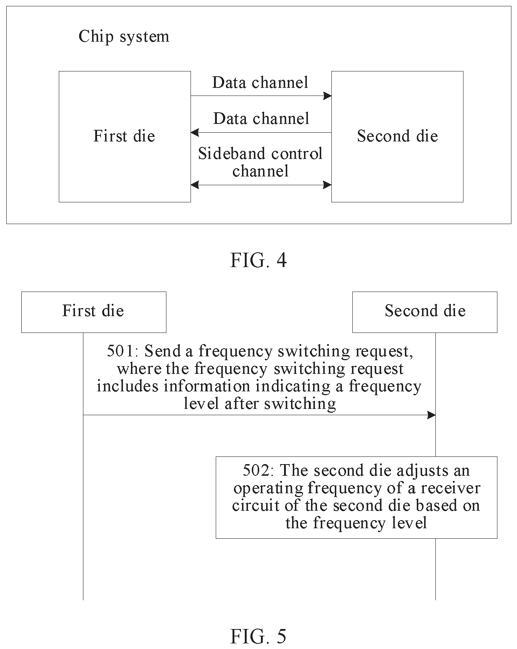

For example, the chiplet system may be applied to a system-on-a-chip (System-on-a-Chip, SoC), and dies having a plurality of functions are integrated on the SoC. For example, the chip system includes a first die and a second die shown in FIG. 4. The first die may transmit service data/application data to the second die through a data channel, and the data channel includes the above downstream link and upstream link. The first die may transmit a control signal to the second die through a sideband control channel.

When an operating frequency of a transmitter circuit of the first die changes, information indicating a frequency level after switching may be sent to the second die. The second die may adjust an operating frequency of a receiver circuit based on the frequency level, to implement fast die-to-die frequency switching.

In some embodiments, the first die and the second die may be understood as roles of two chips that have different functions in initialization and power management. For example, the first die is a host processor chip, and a host may start a stream to enter a low power consumption state, and perform frequency switching in cooperation with the low power consumption state. The second die is a chip connected to the host processor chip, and serves as a slave processor chip. For example, the second die is a memory chip. Generally, the slave processor chip cannot start a stream to enter a low power consumption state, but may respond to the stream of the host processor chip to enter the low power consumption state.

The following describes a frequency adjustment method in this application.

An embodiment of this application provides a frequency adjustment method. The method is applied to a chip system (Chiplet system). The chip system includes a first die and a second die. As shown in FIG. 5, the method includes the following processes.

501: The first die sends a frequency switching request to the second die, where the frequency switching request includes information indicating a frequency level after switching.

For example, when an operating frequency of a SoC domain of the first die is switched, the information indicating the frequency level after switching may be sent to the second die, so that the second die also synchronously switches an operating frequency of a receiver circuit.

The frequency level may also be understood as a frequency range.

In some embodiments, the frequency level in this application indicates a preset frequency mode or a preset frequency parameter corresponding to a service. In the second die, a circuit configuration parameter corresponding to the frequency mode or the frequency parameter may be prestored. In this way, when the second die determines the corresponding circuit configuration parameter based on the frequency mode or the frequency parameter, the second die may adjust a device parameter in the receiver circuit based on the determined circuit configuration parameter, to adjust the operating frequency of the receiver circuit, so that the receiver circuit can process data at a corresponding service rate.

For example, the device parameter herein includes, for example, parameters such as a capacitance, a resistance, an inductance, or a register configuration, and may further include a parameter related to a receive filter and a receive level, and the like.

502: The second die adjusts the operating frequency of the receiver circuit of the second die based on the frequency level.

That the second die adjusts the operating frequency of the receiver circuit based on the frequency level may be understood as that the second die adjusts the circuit configuration parameter of the receiver circuit based on the frequency level.

In some embodiments, a plurality of training parameters may be obtained through pre-training, and each training parameter includes a circuit configuration parameter corresponding to one frequency level. When receiving the information indicating the frequency level after switching, the second die may determine the corresponding circuit configuration parameter based on the information indicating the frequency level after switching, to complete circuit configuration based on the circuit configuration parameter.

After both a transmitter circuit of the first die and the receiver circuit of the second die complete adjustment of circuit configuration parameters, frequency switching of the first die and the second die is completed, the transmitter circuit of the first die sends data at a frequency after switching, and the receiver circuit of the second die receives data at a frequency after switching.

Therefore, in this application, in a case in which die-to-die frequency levels and parameters for adjusting operating frequencies in the chiplet system are trained in advance, through die-to-die exchanging of information of frequency level switching, when a die switches an operating frequency, a stored training parameter may be invoked based on the information indicating the frequency level after switching, to complete fast frequency switching.

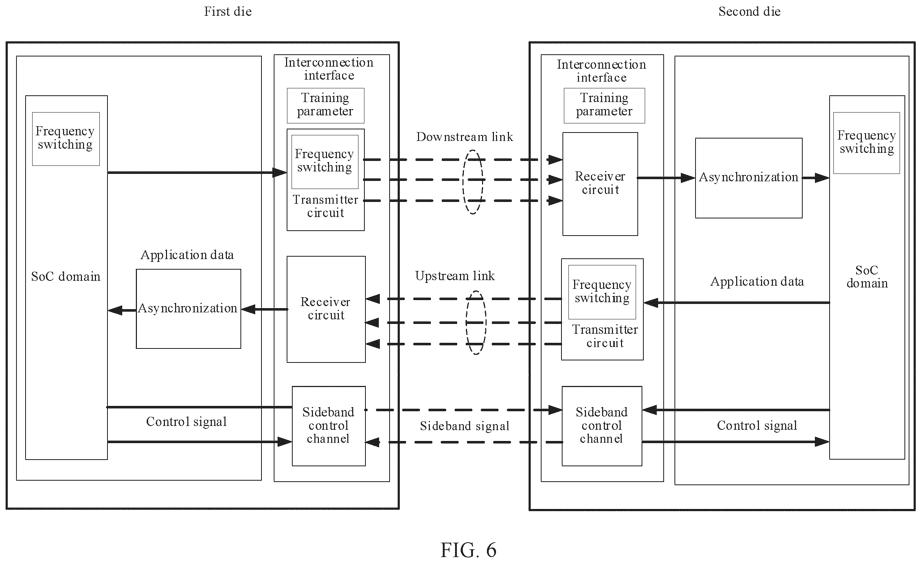

In some embodiments, in the frequency adjustment method in this application, die-to-die interconnection interfaces and SoC domains are in a same clock domain, and asynchronous processing does not need to be performed when the SoC domain transmits data through the interconnection interface. As shown in FIG. 6, a SoC domain of the first die, the transmitter circuit of the first die, and the receiver circuit of the second die are in a same clock domain, which is denoted as a clock domain 1. When the SoC domain of the first die performs clock frequency switching, both the transmitter circuit of the first die and the receiver circuit of the second die need to perform clock frequency switching. The first die may perform circuit configuration on the transmitter circuit of the first die based on a pre-stored training parameter, that is, the circuit configuration parameter corresponding to the frequency level, and the second die may also perform circuit configuration on the receiver circuit of the second die based on the circuit configuration parameter corresponding to the frequency level.

Similarly, a SoC domain of the second die, a transmitter circuit of the second die, and a receiver circuit of the first die are in a same clock domain, which is denoted as a clock domain 2. When the SoC domain of the second die performs clock frequency switching, both the transmitter circuit of the second die and the receiver circuit of the first die need to perform clock frequency switching. The first die may perform circuit configuration on the transmitter circuit of the first die based on a pre-stored training parameter, that is, the circuit configuration parameter corresponding to the frequency level, and the second die may also perform circuit configuration on the receiver circuit of the second die based on the circuit configuration parameter corresponding to the frequency level.

In some embodiments, when the first die determines, based on an application layer, that frequency switching needs to be performed, the transmitter circuit of the first die, the receiver circuit of the first die, the receiver circuit of the second die, and the transmitter circuit of the second die may all perform operating frequency reconfiguration, in other words, all perform circuit configuration parameter reconfiguration.

The following further describes embodiments of this application.

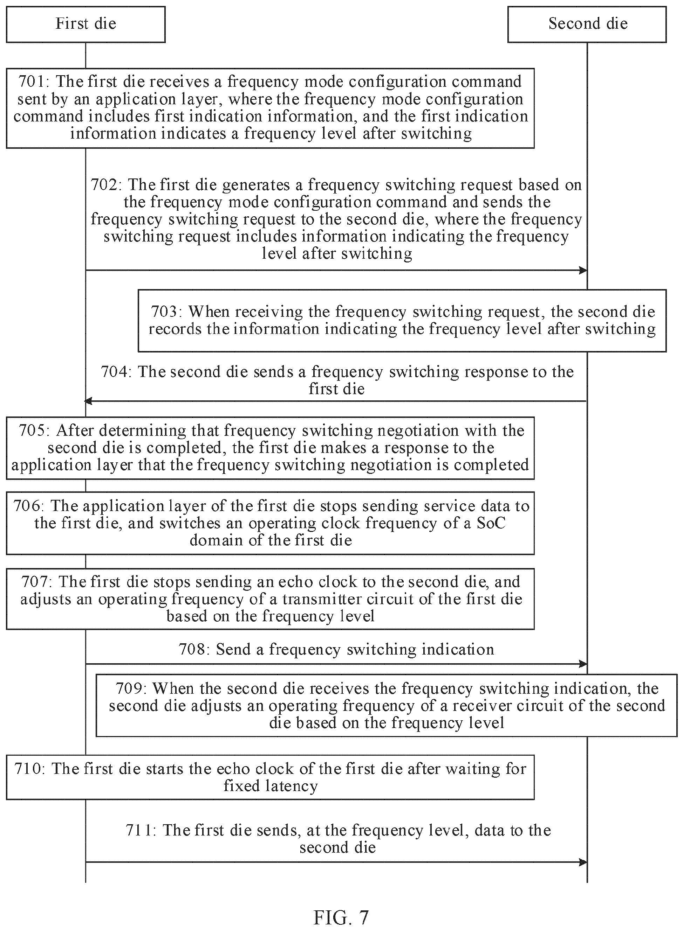

An embodiment of this application provides a frequency adjustment method. The method is applied to a chip system (Chiplet system). The chip system includes a first die and a second die. As shown in FIG. 7, the method includes the following processes.

701: The first die receives a frequency mode configuration command sent by an application layer, where the frequency mode configuration command includes first indication information, and the first indication information indicates a frequency level after switching.

The application layer may be understood as an application service of the first die.

For example, when the application layer determines that a service type changes, and service data of the service type needs to be transmitted at a new frequency level, the application layer may send the frequency mode (frequency mode) configuration command to the first die, to indicate the frequency level after switching to the first die. For example, the application layer sends the frequency mode configuration command to a SoC domain of the first die.

702: The first die generates a frequency switching request based on the frequency mode configuration command and sends the frequency switching request to the second die by using a first low power control word (low power control word, LPW) flit or a first sideband control command (sideband command), where the frequency switching request includes information indicating the frequency level after switching.

Correspondingly, the second die receives, by using the first LPW flit or the first sideband control command, the frequency switching request sent by the first die.

An LPW may be understood as a signal for communication in low power consumption, a low data rate, and low costs.

A sideband (Sideband) is a adjusted signal. That is, a frequency band is generated on each of upper and lower sides of a center carrier, and is referred to as the sideband. The sideband control command is a control command transmitted via the sideband. Generally, the sideband control command is transmitted by using a sideband address (Sideband Address).

In some embodiments, when sending the first LPW flit, the first die stops sending service data to the second die. After sending the frequency switching request, the first die may continue to normally send the service data to the second die.

In some embodiments, when sending the first sideband control command, the first die may normally send the service data to the second die. In other words, normal sending of the service data is not affected.

In some embodiments, the SoC domain of the first die sends the first LPW flit to a receiver circuit of the second die through a transmitter circuit of the first die, and the first LPW flit is equivalent to the switching request in this application. With reference to the descriptions of FIG. 6, the first LPW flit is sent from the transmitter circuit of the first die to the second die through the downstream link.

The downstream link and the upstream link may be high-speed data channels. For example, when an interconnection interface is a high-speed serial interface, the high-speed serial interface is, for example, a PCIE or a universal serial bus (Universal Serial Bus, USB). The PCIE or the USB may perform die-to-die service data transmission through the high-speed data channel.

In this case, an example in which the high-speed serial interface is the PCIE is used. A PCIE of the first die may transmit the first LPW flit to a PCIE of the second die through the high-speed data channel.

For example, the first LPW flit includes a flit header (Header) field, a flit content (payload) field, and a flit tail (Tail) field. The flit payload field includes a sub-type field (SUB _TYPE) and a command subfield (CMD). The sub-type field indicates that the first LPW flit is a frequency switching command, and the command subfield indicates the frequency level. Table 1 shows an example of an LPW flit format.

**Table 1 LPW flit format**

| Flit header | | |
|---|---|---|
| Field name (field name) | Width (width) | Description (description) |
| Type | 1 | 'b0: Control flit |
| ACK | 1 | Reserved, not used |

| Flit payload | | |
|---|---|---|
| Field name | Width | Description |
| SUB_TYPE | 4 | 4'b1100: Frequency switching command |
| | | 4'b1111: Acknowledgement/Response (response) command |
| CMD | 8 | Frequency switching command: 'b00000000 to 'b11111111: Frequency level N. A maximum of 256 frequency levels are supported. An operating frequency corresponding to the frequency level N is (N+1)/256 of a highest frequency. |
| Eserved | ... | Reserved |

| Flit tail | | |
|---|---|---|
| Field name | Width | Description |
| Poison | 1 | ... |
| CRC/ECC/BCH | CRCW/ECCW | ... |

When a bit value of the Type subfield in the flit header field is "0", it indicates that the first LPW flit is a control flit, so that the second die may be indicated to execute a control command indicated by the first LPW flit. When a bit value of the SUB_TYPE subfield in the flit payload field is "1100", it indicates that the first LPW flit is a frequency switching command. A bit value of the CMD subfield in the flit payload field may alternatively be one of a plurality of bit values ('b00000000 to 'b11111111), and indicates the frequency level N, where N is an integer. For example, when the bit value of the CMD subfield is N of 00000001, a value of N is 1, and an operating frequency indicated by a frequency level 1 is 2/256 of the highest frequency.

The bit value of the CMD subfield indicating the frequency level is not limited in this application.

In some embodiments, when the first die sends the frequency switching request to the second die by using the first sideband control command, it may be understood as that the SoC domain of the first die sends the frequency switching request to a sideband control channel of the second die through a sideband control channel of the first die.

For example, the first sideband control command may be exchanged through a die-to-die sideband signal interface. For example, for a single die, the sideband signal interface includes SBC_TXC configured to transmit a clock frequency of a transmit side, SBC_TXD configured to transmit serial data of the transmit side, SBC_RXC configured to transmit a clock frequency of a receive side, and SBC_RXD configured to transmit serial data of the receive side.

In conclusion, the sideband signal interface is used for die-to-die exchanging of a control signal and a state. The control signal is, for example, the first sideband control command in this application. In the chiplet system, the sideband signal interface may use a serial transmission manner. Sideband signals of each die include a sideband signal in a transmit direction and a sideband signal in a receive direction. Each sideband signal may be interconnected by using one clock signal and one data signal.

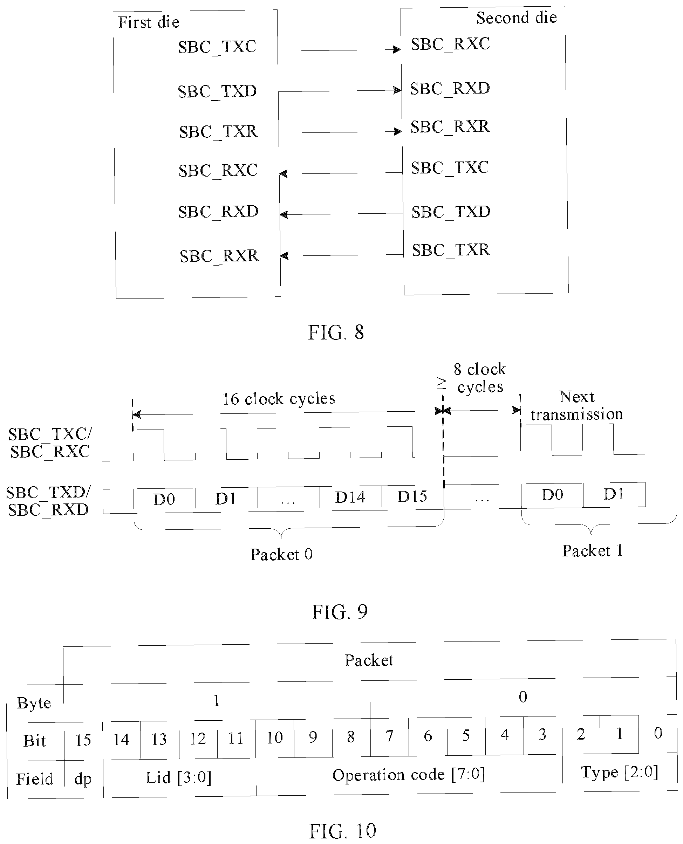

FIG. 8 is a diagram of die-to-die sideband signal interface interconnection. For descriptions of each sideband signal interface, refer to Table 2.

**Table 2 Sideband signal interface**

| Sideband signal interface name | Property | Description |
|---|---|---|
| SBC_TXC | Direction: Output | Transmitted clock with a maximum frequency, for example, 500 MHz |
| | Signal width: 1 bit | |
| | Synchronized to: NA (null) | |
| SBC_TXD | Direction: Output | Transmit side serial data |
| | Signal width: 1 bit | |
| | Synchronized to: SBC_TXC | |
| SBC_TXR | Direction: Output | Repair (repair) signals of SBC_TXC and SBC_TXD |
| | Signal width: 1 bit | |
| | Synchronized to: NA | |
| SBC_RXC | Direction: Input | Receive side clock with a maximum frequency, for example, 500 MHz |
| | Signal width: 1 bit | |
| | Synchronized to: NA | |
| SBC_RXD | Direction: Input | Receive side serial data |
| | Signal width: 1 bit | |
| | Synchronized to: SBC_RXC | |
| SBC_RXR | Direction: Input | Repair signal of SBC_RXC and SBC_RXD |
| | Signal width: 1 bit | |
| | Synchronized to: NA | |

In Table 2, SBC_TXC represents a clock signal of a sideband control signal in a transmit direction; SBC_TXD represents data (a control command) of the sideband control signal in the transmit direction; SBC_RXC represents a clock signal of the sideband control signal in a receive direction; and SBC_RXD represents data (a control command) of the sideband control signal in the receive direction.

In the example of the sideband signal interfaces shown in Table 2, the first die may send the first sideband control signal to SBC_RXD of the second die through SBC_TXD. The first die sends the first sideband control signal at a clock frequency indicated by SBC_TXC, and the second die receives the first sideband control signal at a clock frequency indicated by SBC_RXC.

The clock frequencies SBC_TXC and SBC_RXC of the sideband signal and the sideband control signal (data) may be in a synchronous time sequence relationship, and a clock rising edge is aligned with a data transition edge.

FIG. 9 is a diagram of a time sequence when a sideband signal interface performs transmission in a packet manner. It can be learned from FIG. 9 that, 1-bit data may be transmitted at a single data rate (Single Data Rate, SDR) in each clock cycle, 16-bit data (D0 to D15) (16 clock cycles (cycles)) is continuously transmitted each time to form a packet (packet), and there are at least 8 clock cycles between two packets (for example, a packet 0 and a packet 1 in FIG. 9). In an interval between the two packets, SBC_TXC may be maintained at a low level, and data I/O (SBC_TXD) may be in a low power consumption state.

The first sideband control command in this application may be sent to the second die by occupying 16 bits in the 16 clock cycles.

For example, for a packet format of the sideband signal in this application, for example, when a format of the first sideband control signal is 16 bits, refer to FIG. 10 for the format. For a function of each field in this format, refer to descriptions in Table 3.

**Table 3**

| Domain | Function description |
|---|---|
| Type (type) [2:0] | Message type |
| | 010: 16-bit frame format, physical layer request (request) |
| | 011: 16-bit frame format, complete response |
| | 100: 16-bit frame format, frequency switching command at a data link layer |
| | 111: 16-bit frame format, other control information at the data link layer |
| | Others: Reserved for future expansion |
| Operation code (opcode) [7:0] | Message code |
| Lane identifier Lid [3:0] | Lane ID: 0 indicates that all lanes are controlled, and 1 to 15 indicate that a single lane is separately controlled. |
| dp | Data parity bit (Data Parity), for performing parity check the 15 bits (including reserved) of the packet except dp |

In the examples in FIG. 10 and Table 3, when the first sideband control command in this application is transmitted in a packet format occupying 16 bits, a bit value of the type [2:0] field may be 100.

For example, when type=100, for a definition of the operation code (opcode) of the frequency switching command at the data link layer, refer to Table 4. An implementation is similar to that of the CMD field in Table 1.

**Table 4**

| Value of opcode [7:0] | Function description |
|---|---|
| 00000000 to 11111111 | Frequency level N. A maximum of 256 frequency levels are supported. An operating frequency corresponding to the frequency level N is (N+1)/256 of a highest frequency. |

In some embodiments, when type=111, for a definition of opcode of other control information at the data link layer in Table 3, refer to Table 5.

**Table 5**

| Value of opcode [7:0] | Function description |
|---|---|
| 11111111 | SBC_SYNC_IND: Data synchronization indication |
| Others | Reserved |

The foregoing SBC_SYNC_IND may be, for example, used by the first die to notify the second die that frequency switching performed by the first die is completed, and the second die may synchronously start to perform frequency switching.

703: When receiving the frequency switching request, the second die records the information indicating the frequency level after switching.

In some embodiments, corresponding to step 702, if the second die receives the first LPW flit, the receiver circuit of the second die stops receiving the service data from the downstream link, and records the information indicating the frequency level after switching. When the second die stops receiving the service data, if the second die completes frequency switching, the second die may receive service data of the service type at a new operating frequency.

Corresponding to step 702, if the second die receives the first sideband control command, the second die may normally receive the service data, and record the information indicating the frequency level after switching.

704: The second die sends a frequency switching response to the first die.

For example, the second die sends a frequency switching response to the first die by using a second LPW flit or a second sideband control command.

Correspondingly, the first die receives, by using the second LPW flit or the second sideband control command, the frequency switching response sent by the second die.

In this case, the first die may be waiting to receive the frequency switching response.

For example, a format of the second LPW flit is similar to the format of the first LPW flit shown in Table 1. A difference lies in that, with reference to Table 1, a bit value of SUB _TYPE is 4'b1111, indicating that the second LPW flit is a response command for frequency switching.

A format of the second sideband control command is similar to the format of the sideband signal shown in Table 3, and a bit value of the type [2:0] field may be 011.

In some embodiments, when sending the second LPW flit, the second die may stop sending the service data to the first die. After completing sending of the second LPW flit, the second die may continue to send the service data to the first die normally.

When sending the second sideband control command, the second die may normally send the service data to the first die, that is, normal sending of the service data by the second die is not affected.

In some embodiments, when the first die sends the frequency switching request, a timer may be started. If the first die receives no frequency switching response within timing time, the first die may send the frequency switching request again through a data link (the downstream link), or the first die continuously sends a null flow control unit (a NULL flit) to the second die through a data link until the frequency switching response sent by the second die is received.

The timing time is greater than bidirectional transmission latency of the interconnection interface, and may be configured in a specific implementation process.

When the first die continuously sends the frequency switching request or the NULL flit within the timing time, a service between the first die and the second die can be maintained uninterrupted, and the first die and the second die may cache received service data.

In some embodiments, when the second die receives the first LPW flit, the second die may adjust a priority of the to-be-sent second LPW flit to a highest priority, to preferentially send the second LPW flit to the first die.

705: After determining that frequency switching negotiation with the second die is completed, the first die makes a response to the application layer that the frequency switching negotiation is completed.

The foregoing steps 701 to 704 may be understood as that the frequency switching negotiation is completed at data link layers of the first die and the second die.

When receiving the frequency switching response, the first die determines that the frequency negotiation with the second die is completed, and may make a response to the application layer of the first die that the frequency switching negotiation is completed. The response herein may be understood as a response to the frequency mode configuration command in step 701.

706: The application layer of the first die stops sending the service data to the first die, and switches an operating clock frequency of the SoC domain of the first die.

Correspondingly, the data link layer of the first die stops receiving the service data from the application layer. For example, the first die may cache service data that has been received but has not been sent to the second die. When frequency switching is completed, the SoC domain of the first die continues to send the service data (a service packet) to the second die.

The switched operating clock frequency of the SoC domain of the first die herein includes a transmit clock frequency of the SoC domain of the first die.

707: The first die stops sending an echo clock to the second die, and adjusts an operating frequency of the transmitter circuit of the first die based on the frequency level.

A clock of the transmitter circuit of the first die may be connected to a clock of the receiver circuit of the second die via a clock line. The clock of the receiver circuit of the second die is an echo clock of the clock of the transmitter circuit of the first die. When a clock frequency of the transmitter circuit of the first die changes, the echo clock of the receiver circuit of the second die also changes.

That the first die adjusts the operating frequency of the transmitter circuit of the first die based on the frequency level may be understood as: The first die determines a circuit configuration parameter at a new frequency level based on a training parameter pre-stored in an interconnection interface circuit of the first die, that is, a correspondence between the frequency level and the circuit configuration parameter, to configure a circuit parameter of the first die based on the circuit configuration parameter, so that a configured circuit parameter of the first die adapts to the new frequency level.

The circuit configuration parameter in the training parameter of the first die may be understood as a circuit configuration parameter of the transmitter circuit of the interconnection interface circuit of the first die.

In some embodiments, the training parameter may be pre-stored before delivery of the die.

708: The first die sends a frequency switching indication to the second die.

In some embodiments, the first die may send the frequency switching indication to the second die by using a sideband signal command (SBC_SYNC_IND), and the frequency switching indication indicates the second die to perform frequency switching.

For a format of the sideband signal command, refer to the descriptions in Table 3 and Table 5. A value of a type [2:0] field in the sideband signal command may be "111", and a value of an opcode [7:0] field is "11111111".

709: When the second die receives the frequency switching indication, the second die adjusts the operating frequency of the receiver circuit of the second die based on the frequency level.

The second die determines a circuit configuration parameter based on the information indicating the frequency level after switching, and performs circuit parameter configuration on the receiver circuit of the second die in the interconnection interface circuit based on the circuit configuration parameter.

Similarly, that the second die adjusts the operating frequency of the transmitter circuit of the second die based on the frequency level may be understood as: The second die determines a circuit configuration parameter at a new frequency level based on a training parameter pre-stored in an interconnection interface circuit of the second die, that is, a correspondence between the frequency level and the circuit configuration parameter, to configure a circuit parameter of the receiver circuit of the second die based on the circuit configuration parameter, so that a configured circuit parameter of the receiver circuit of the second die adapts to the new frequency level.

In some embodiments, the training parameter of the first die may be the same as or different from the training parameter of the second die. When the training parameter of the first die is different from the training parameter of the second die, it may be understood as that a plurality of frequency levels in the training parameter of the first die and the training parameter of the second die are the same, and circuit configuration parameters at a same frequency level are different.

Alternatively, in some embodiments, when the training parameter of the first die is the same as the training parameter of the second die, the first die may send the stored training parameter to the second die when the first die and the second die are powered on and initialized.

In some embodiments, that the first die configures the circuit parameter may be completed before the first die sends the frequency switching request to the second die, or may be completed in a process in which the first die sends the frequency switching request to the second die, or may be completed after the first die receives the frequency switching response, or may be completed after the application layer switches the clock frequency of the SoC domain. In other words, time at which the first die and the second die complete circuit parameter configuration may not be synchronous.

710: The first die starts the echo clock of the first die after waiting for fixed latency.

The fixed latency needs to cover stabilizing time after the second die switches the frequency and stabilizing time after the first die switches the frequency.

711: The first die sends, at the frequency level, data to the second die.

Correspondingly, the second die receives, at the frequency level, the data sent by the first die.

In some embodiments, when the first die receives an indication of completing circuit parameter configuration by the second die, and when the first die also completes circuit parameter configuration, the first die may send, at the frequency level after switching, the service data to the second die.

Therefore, in the frequency adjustment method in this application, in a case in which the SoC domain and the interconnection interface are in a same clock domain, the training parameter of the interconnection interface of the die may be pre-stored in the circuit of the die, information indicating the frequency level after switching is exchanged through a high-speed data channel or a sideband control channel, and both dies may invoke the stored training parameter based on the frequency level to complete fast frequency level switching.

In addition, in this application, considering that receiving the service data from the application layer needs to be stopped in a frequency switching process, and a service flow needs to be maintained uninterrupted, when fast switching of the frequency level is implemented, it is beneficial for reducing caching of service data.

When sending and receiving the service data are stopped in the frequency switching process, switching processing latency may be reduced when fast switching of frequency level is implemented, and this is equivalent to reducing back pressure time of the service data.

In addition, when the SoC domain of the first die, the transmitter circuit of the first die, and the receiver circuit of the second die are in a same clock domain, digital logic of a digital link layer of the first die can perform dynamic voltage adjustment based on a frequency change of the SoC domain, to implement dynamic voltage and frequency scaling (Dynamic Voltage and Frequency Scaling, DVFS). This can reduce power consumption of the first die. Similarly, power consumption of the second die can also be reduced.

It can be understood that to implement the foregoing functions, the foregoing die includes a hardware structure and/or software module to perform each corresponding function. A person skilled in the art is to be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it is not to be considered that the implementation exceeds the scope of embodiments of this application.

In embodiments of this application, functional modules of the foregoing die may be divided based on the foregoing method examples. For example, each functional module may be obtained through division based on each corresponding function, or two or more functions may be integrated into one processing module. The integrated module may be implemented in a form of hardware, or may be implemented in a form of a software functional module. It is to be noted that, in embodiments of this application, module division is an example, and is merely a logical function division. In actual implementation, another division manner may be used.

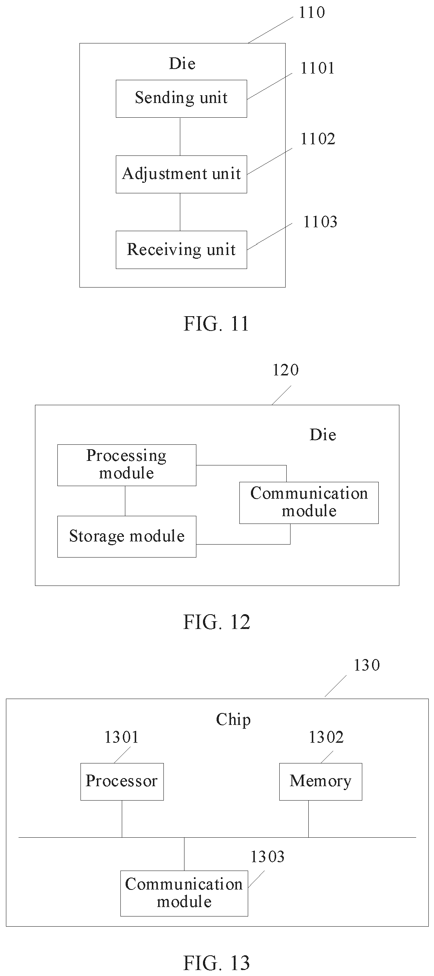

When functional modules are obtained through division based on corresponding functions, FIG. 11 is a diagram of possible composition of a die 110 related to the foregoing embodiments. As shown in FIG. 11, the die 110 may include a sending unit 1101, an adjustment unit 1102, and a receiving unit 1103.

The sending unit 1101 may be configured to implement a function of the transmitter circuit of the interconnection interface in the foregoing die, and the receiving unit 1103 may be configured to implement a sending function of the receiver circuit of the interconnection interface in the foregoing die. The adjustment unit 1102 may be configured to implement a function of switching the operating frequency of the SoC domain, the operating frequency of the transmitter circuit, and the operating frequency of the receiver circuit in the foregoing die.

The sending unit 1101 may be configured to support the die 110 in performing the foregoing steps 501, 702, 704, 705, 708, 711, and the like, and/or may be used in another process of the technology described in this specification.

The adjustment unit 1102 may be configured to support the die 110 in performing the foregoing steps 502, 703, 706, 707, 709, 710, and the like, and/or may be used in another process of the technology described in this specification.

The receiving unit 1103 may be configured to support the die 110 in performing step 701 and the like, and/or may be used in another process of the technology described in this specification.

It is to be noted that all related content of the steps in the foregoing method embodiments may be cited in function descriptions of corresponding functional modules. Details are not described herein again.

The die 110 provided in this embodiment is configured to execute the foregoing frequency adjustment method, and therefore a same effect as the foregoing implementation method can be achieved.

When an integrated unit is used, as shown in FIG. 12, an embodiment of this application discloses a die 120. The die 120 may be the chip system in the foregoing embodiment, for example, a small chip/chiplet of a chiplet system. The die 120 may include a processing module, a storage module, and a communication module. The processing module may be configured to control and manage an action of the die 120. For example, the processing module may be configured to support the die 120 in performing the process of the adjustment unit 1102. The storage module may be configured to support the die 120 in storing program code, data, and the like. For example, the storage module stores training data in this application, including a circuit configuration parameter corresponding to a frequency level. The communication module may be configured to support communication between the die 120 and another die. The communication module may include the interconnection interface in this application.

Certainly, unit modules in the die 120 include but are not limited to the processing module, the storage module, and the communication module. For example, the die 120 may further include a power module and the like. The power module is configured to supply power to the die 120.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a memory. The communication module may be specifically a device that interacts with another external device, such as a chip interface.

For example, the processing module is a processor 1301, the storage module may be a memory 1302, and the communication module may be referred to as a communication interface 1303, for example, the interconnection interface in this application. The die 120 provided in this embodiment of this application may be a chip 130 shown in FIG. 13. The processor, the memory, the communication interface, and the like may be connected together, for example, connected through a bus.

An embodiment of this application further provides a communication apparatus, including one or more processors and one or more memories. The one or more memories are coupled to the one or more processors. The one or more memories are configured to store computer program code, and the computer program code includes computer instructions. When the one or more processors execute the computer instructions, the communication apparatus is enabled to perform the foregoing related method steps, to implement the frequency adjustment method in the foregoing embodiments.

An embodiment of this application further provides a computer-readable storage medium. The computer-readable storage medium stores computer program code. When a processor executes the computer program code, a communication apparatus performs the frequency adjustment method in the foregoing embodiments.

An embodiment of this application further provides a computer program product. When the computer program product is run on a computer, the computer is enabled to perform the foregoing related steps to implement the frequency adjustment method performed by the communication apparatus in the foregoing embodiments.

The communication apparatus such as the die, the computer storage medium, the computer program product, or the chip provided in embodiments of this application is configured to perform the corresponding method provided above. Therefore, for beneficial effects that can be achieved by the communication apparatus, refer to beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technologies, or all or some of the technical solutions may be implemented in the form of a software product. The software product is stored in a storage medium and includes a plurality of instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A frequency adjustment method, wherein the method is applied to a chip system, the chip system comprises a first die and a second die, and the method comprises:
sending, by the first die, a frequency switching request to the second die, wherein the frequency switching request comprises information indicating a frequency level after switching; and
adjusting, by the second die, an operating frequency of a receiver circuit of the second die based on the frequency level.

2. The method according to claim 1, wherein a transmitter circuit of the first die and the receiver circuit of the second die are in a same clock domain.

3. The method according to claim 1 or 2, wherein before the sending, by the first die, a frequency switching request to the second die, the method further comprises:
receiving, by the first die, a frequency mode configuration command sent by an application layer, wherein the frequency mode configuration command comprises first indication information, and the first indication information indicates the frequency level after switching; and
generating, by the first die, the frequency switching request based on the frequency mode configuration command.

4. The method according to any one of claims 1 to 3, wherein before the adjusting, by the second die, an operating frequency of a receiver circuit of the second die, the method further comprises:
stopping, by the first die, receiving service data from the application layer.

5. The method according to any one of claims 1 to 4, wherein the sending, by the first die, a frequency switching request to the second die comprises:
sending, by the first die, the frequency switching request to the second die by using a first low power control word LPW flow control unit or a first sideband control command; and
the method further comprises:
receiving, by the first die by using a second LPW flow control unit or a second sideband control command, a frequency switching response sent by the second die.

6. The method according to claim 5, wherein the first LPW flow control unit comprises a flow control unit header field, a flow control unit content field, and a flow control unit tail field, wherein
the flow control unit content field comprises a sub-type field and a command subfield, the sub-type field indicates that the first LPW flow control unit is a frequency switching command, and the command subfield indicates the frequency level.

7. The method according to claim 5, wherein the first sideband control command comprises a field indicating a message type, a field indicating message code, a field indicating a lane identifier, and a field indicating a parity bit, wherein
the field indicating the message type indicates that the first sideband control command is a frequency switching command.

8. The method according to any one of claims 1 to 7, wherein before the adjusting, by the second die, an operating frequency of a receiver circuit of the second die, the method further comprises:
stopping, by the first die, sending an echo clock to the second die, and adjusting an operating frequency of the transmitter circuit of the first die based on the frequency level.

9. The method according to any one of claims 1 to 8, wherein before the adjusting, by the second die, an operating frequency of a receiver circuit of the second die, the method further comprises:
continuously sending, by the first die, a null flow control unit to the second die until the frequency switching response sent by the second die is received.

10. The method according to any one of claims 1 to 9, wherein before the adjusting, by the second die, an operating frequency of a receiver circuit of the second die, the method further comprises:
after determining that frequency switching negotiation with the second die is completed, making, by the first die, a response to the application layer that the frequency switching negotiation is completed.

11. The method according to any one of claims 1 to 10, wherein before the adjusting, by the second die, an operating frequency of a receiver circuit of the second die, the method further comprises:
sending, by the first die, a frequency switching indication to the second die, wherein the frequency switching indication indicates the second die to perform frequency switching.

12. The method according to any one of claims 1 to 11, wherein the method further comprises:
starting, by the first die, the echo clock of the first die after waiting for fixed latency.

13. The method according to any one of claims 1 to 12, wherein the method further comprises:
sending, by the first die at the frequency level, data to the second die; and
receiving, by the second die at the frequency level, the data sent by the first die.

14. A frequency adjustment method, wherein the method is applied to a chip system, the chip system comprises a first die and a second die, and the method comprises:
receiving, by the second die, a frequency switching request sent by the first die, wherein the frequency switching request comprises information indicating a frequency level after switching; and
adjusting, by the second die, an operating frequency of a receiver circuit of the second die based on the frequency level.

15. The method according to claim 14, wherein a transmitter circuit of the first die and the receiver circuit of the second die are in a same clock domain.

16. The method according to claim 14 or 15, wherein the receiving, by the second die, a frequency switching request sent by the first die comprises:
receiving, by the second die by using a first low power control word LPW flow control unit or a first sideband control command, the frequency switching request sent by the first die; and
the method further comprises:
sending, by the second die, a frequency switching response to the first die by using a second LPW flow control unit or a second sideband control command.

17. The method according to claim 15 or 16, wherein the method further comprises:
when receiving the frequency switching request sent by the first die, recording, by the second die, the information indicating the frequency level after switching.

18. The method according to any one of claims 15 to 17, wherein before the adjusting, by the second die, an operating frequency of a receiver circuit of the second die based on the frequency level, the method further comprises:
receiving, by the second die, a frequency switching indication sent by the first die, wherein the frequency switching indication indicates the second die to perform frequency switching.

19. A frequency adjustment method, wherein the method is applied to a chip system, the chip system comprises a first die and a second die, and the method comprises:
sending, by the first die, a frequency switching request to the second die, wherein the frequency switching request comprises information indicating a frequency level after switching; and
adjusting, by the first die, an operating frequency of a transmitter circuit of the first die based on the frequency level.

20. The method according to claim 19, wherein the transmitter circuit of the first die and a receiver circuit of the second die are in a same clock domain.

21. The method according to claim 19 or 20, wherein the sending, by the first die, a frequency switching request to the second die comprises:
sending, by the first die, the frequency switching request to the second die by using a first low power control word LPW flow control unit or a first sideband control command; and
the method further comprises:
receiving, by the first die by using a second LPW flow control unit or a second sideband control command, a frequency switching response sent by the second die.

22. A chip system, wherein the chip system comprises a first die and a second die, wherein
the first die is configured to send a frequency switching request to the second die, wherein the frequency switching request comprises information indicating a frequency level after switching; and
the second die is configured to adjust an operating frequency of a receiver circuit of the second die based on the frequency level.

23. The chip system according to claim 22, wherein a transmitter circuit of the first die and the receiver circuit of the second die are in a same clock domain.

24. The chip system according to claim 22 or 23, wherein the first die is configured to:
receive a frequency mode configuration command sent by an application layer, wherein the frequency mode configuration command comprises first indication information, and the first indication information indicates the frequency level after switching; and
generate the frequency switching request based on the frequency mode configuration command.

25. The chip system according to any one of claims 22 to 24, wherein the first die is configured to:
send the frequency switching request to the second die by using a first low power control word LPW flow control unit or a first sideband control command; and
receive, by using a second LPW flow control unit or a second sideband control command, a frequency switching response sent by the second die.

26. A second die, wherein a chip system comprises a first die and the second die, and the second die comprises:
a receiver, configured to receive a frequency switching request sent by the first die, wherein the frequency switching request comprises information indicating a frequency level after switching; and
a processor, configured to adjust an operating frequency of a receiver circuit of the second die based on the frequency level.

27. The second die according to claim 26, wherein a transmitter circuit of the first die and the receiver circuit of the second die are in a same clock domain.

28. The second die according to claim 26 or 27, wherein the receiver is configured to:
receive, by using a first low power control word LPW flow control unit or a first sideband control command, the frequency switching request sent by the first die; and
the receiver is further configured to:
send a frequency switching response to the first die by using a second LPW flow control unit or a second sideband control command.

29. The second die according to any one of claims 26 to 28, wherein the processor is further configured to:
when the receiver is configured to receive the frequency switching request sent by the first die, record the information indicating the frequency level after switching.

30. The second die according to any one of claims 26 to 29, wherein the receiver is further configured to receive a frequency switching indication sent by the first die, wherein the frequency switching indication indicates the second die to perform frequency switching.

31. A first die, wherein a chip system comprises the first die and a second die, and the first die comprises:
a transmitter, configured to send a frequency switching request to the second die, wherein the frequency switching request comprises information indicating a frequency level after switching; and
a processor, configured to adjust an operating frequency of a transmitter circuit of the first die based on the frequency level.

32. The first die according to claim 31, wherein the transmitter circuit of the first die and a receiver circuit of the second die are in a same clock domain.

33. The first die according to claim 31 or 32, wherein the transmitter is configured to:
send the frequency switching request to the second die by using a first low power control word LPW flow control unit or a first sideband control command; and
the first die further comprises a receiver, configured to receive, by using a second LPW flow control unit or a second sideband control command, a frequency switching response sent by the second die.

34. A computer-readable storage medium, comprising computer instructions, wherein when the computer instructions are run on an electronic device, the electronic device is enabled to perform the method according to any one of claims 1 to 13.

35. A computer-readable storage medium, comprising computer instructions, wherein when the computer instructions are run on an electronic device, the electronic device is enabled to perform the method according to any one of claims 14 to 18.

36. A computer-readable storage medium, comprising computer instructions, wherein when the computer instructions are run on an electronic device, the electronic device is enabled to perform the method according to any one of claims 19 to 21.
